# EUROPEAN PATENT SPECIFICATION

(11) **EP 2 740 367 B1**
(45) Date of publication and mention of the grant of the patent: **27.04.2016**
(21) Application number: 14000681.8
(22) Date of filing: 26.02.2014
(51) Int. Cl.: A23G 1/18, B01F 7/30

(54) **Chocolate tempering apparatus with planetary mixers**
Schokoladentemperiereinrichtung mit Planetenmischern
Appareil de conditionnement des chocolats avec mélangeurs planétaires

(43) Date of publication of application: 11.06.2014
(73) Proprietor: Aasted ApS, 3520 Farum (DK)
(72) Inventor: Holmud, Dennis, DK-2860 Søborg (DK)
(74) Representative: Heiden, Finn

(56) References cited:
- EP-A2- 0 806 148
- EP-A2- 1 050 215
- GB-A- 426 541
- US-A- 2 055 956
- US-A- 2 588 277
- US-A- 2 610 042

## Description

The present invention relates to apparatus for continuous tempering of chocolate mass comprising a column of interconnected mass chambers and intermediary water chambers, a central drive shaft in engagement with mixing elements arranged in at least one mass chamber.

The mixing elements of the known tempering apparatus are propels or discs. The propels comprise between two and six plate-shaped blades extending to the inside of the peripheral wall of the chocolate chamber. The outer periphery of the discs leaves a concentric gap to the inside peripheral wall of the chocolate chamber for the chocolate mass to pass through. The propels or discs have a central hub mounted directly onto the shaft, which typically rotates with 30-50 rpm.

The plate-shaped blades and the discs comprise a variety of mixing knobs or obstacles on their upper and lower surfaces for enhancing the flow and mixing of the chocolate mass. However, the radial-velocity of the blades or of the discs are low close to the hub and very high at the outer peripheries. This makes a severe difference in the mixing capability at the center area in comparison with at the peripheral area.

When the mixing of the chocolate is insufficient in areas, the heat transfer between the water chamber and the chocolate mass is not effective enough in such areas. The temperature through the mass volume is not even. The crystallization in the mass and the mixing up of the created crystals in the mass volume is simply too slow and not being throughout the mass, as desired. The mass becomes heterogeneous and the quality of the mass is below the standard required. High quality mass requires continuous development of a homogeneous mass volume during tempering.

Especially under certain conditions of tempering, for example when the mass exhibit high viscosity, the friction between the mixing means and the mass becomes very high. Then, the mixing is generally low, especially at the central part of the chambers, and the mass may even be dragged to rotation instead of being mixed thoroughly.

Between the small outer surfaces of the knobs or obstacles and the opposite chamber surfaces are defined so-called shear-gaps. For any point of the rotating mixing blade or sheave, is defined a shear-value or shear-gradient between its surface and the opposite surface of the chocolate chamber. The shear-value is calculated as the velocity of the mixing blade divided by the size of the gap at that particular point. The size of the shear- gap is mostly constant from center and to the periphery, so that the shear-value is rising with the size of the radius towards the periphery. The shear-values for a blade or sheave is in the range between 250 s-1 and 7000 s-1. Typically, the shear-values are around 500 s-1 near the center and 4000 s-1 at the periphery, when the shaft is set to 50 rpm for the known apparatus. Too low shear-values are not desirable. Neither are too high shear-values, and especially not in the same apparatus. The compromise is to provide a desirable range of shear-values. For example 1500 - 3000 s-1 at the larger part of the chambers. Typically between ¼ and ¾ or more of the radius of the chambers. Outside that range the crystallization is not performing as controlled as desired, which influences the perfect part of the crystallization.

Science has since long agreed, that the actually achieved shear value Is a parameter decisive for the type, size and number of crystals created in the shear-gap. As the shear-values achieved during tempering are decisive for the crystallization during the tempering process and consequently the quality of the result, it is important that all parts of the mass passing through the apparatus are exposed to similar conditions of shear and shear-value.

Generally, the chocolate mass encompass all types of suspensions of non-fat particles such as sugar, milk powders and cocoa solids mixed up with a liquid fat constituent, so that the suspensions are capable of crystallizing. When it comes to the most widely used chocolate mass types, the fat constituent comprises genuine cocoa butter typically in a content of up to approximately 35%. However, the fat phase may also comprise substitutes as well. A small content of up to 2-3 % of genuine cocoa butter may still be left in the recipe. Substitutes may be in the form of other types of fat-containing oils such as palm-kernel oil. Chocolate types having the cocoa butter been replaced by other fats are often named commercially as compound chocolate, especially when the cocoa butter has been replaced completely by palm-kernel oil. Mass made of up to 100% cocoa butter may however also be continuously tempered. It is used later on as constituent in the production of different chocolate mass recipes.

For the continuous tempering to be performed, it is decisive, that whether the fat phase constitutes of genuine cocoa butter or substitutes, the fat phase must be capable of crystallizing into stable crystal types when the mass solidifies, such as the βV-crystals developing in genuine cocoa butter. Only then, eatable chocolate articles with good taste, crisp break and shiny appearance are created. The solidified chocolate articles will also achieve the longest possible shelf life and the best resistance against bloom, as instable crystals are diminished. If there is a content of in-stable crystals left in the mass, they will give rise to shorter shelf-life as the articles will bloom more quickly as when in-stable crystals are not present.

The known tempering apparatus could have several different inner configurations as long as it is able to perform continuous tempering of fat-containing chocolate mass. The chocolate channels connecting the chambers could for example be arranged at the periphery of the chocolate chambers or could be arranged as ring-shaped openings through which the shaft extends. An external pump provides a pressure for the flow of chocolate through the chambers of the apparatus. A given size of a tempering machine at the market has a fixed height and consequently fixed areas for cooling, crystallisation and reheating of the mass in the chambers of the particular column. This determines a maximum capacity for continuously tempering of a particular chocolate mass with the machine.

EP 1 050 215 A2 discloses an apparatus for continuous tempering of chocolate mass of the introductory art comprising a column of interconnected, disc-shaped mass chambers and intermediary water chambers and a central drive shaft extending through the chambers. Mixing elements in the form of centrally arranged sheaves in each chamber are fixed directly to the shaft for being rotated therewith. The mixing sheaves are thickest at the center and are decreasing in thickness towards the periphery, so that shear gaps with increasing width towards the periphery of the chambers are present. In the central part of the sheaves are holes for improving mixing of the chocolate.

GB 426541 discloses an open hopper for tempering of chocolate mass. The hopper comprises an outer tank and an inner receptacle separated by a space for cooling or heating medium controlling the tempering of the chocolate. Through a central pillar, a shaft extends to above the receptacle. A casing for two engaging gear wheels extends radially out from the upper end of the shaft. Each of the gear wheels are fixed to spindles from each of which U-shaped stirring vanes are immersed into the chocolate mass. By rotation of the central shaft the stirring vanes are circulated through the chocolate receptacle, at the same rotating around the spindles.

According to the present invention a radially extending part is arranged in the mass chamber with its inner end connected to a hub engaged on the shaft, and the mixing elements comprise at least one planetary mixer pivotally arranged on the radially extending part, at a fixed radius from the centre of the shaft.
By rotation of the shaft, the engaged hub and the radially extending part is rotated. The planet wheel accomplish a circular path in the chamber and is simultaneously free to rotate around its own centre. Each mixing element is carried by a radially extending part and consequently performs the same simultaneous pattern of mixing movements in the chocolate mass. The movement along the circular path provides a continuous mixing of the central part of the chambers. The free rotation of the mixing elements around their own centres provide an unforeseen effective mixing of the chocolate in the parts of the chamber distant to the central part, i.e. at the centre of the chamber and at the periphery thereof.

The continuous sweeping of the chamber with mixing elements rotating around their own axis ensures that there are no longer parts of the chambers present, where the mass is not being properly and evenly mixed during tempering. The improved mixing provides a homogenous chocolate mass during tempering, which ensures a perfectly controllable crystallisation and consequently high quality of the tempered mass, which is easily reproducible.

The inventive tempering apparatus exhibit an improved capacity span of kilograms tempered mass per hour than the prior art apparatus having the same size. It means, that the inventive tempering apparatus only needs a much smaller total cooling chamber surface area than the prior art apparatus, for tempering the same amount of chocolate mass per hour. Consequently, the inventive apparatus is made smaller in size than before. The height of the column are for example reduced, or the diameter of the column is reduced, or both.

When the radially extending part is a plate-shaped arm, the chocolate mass is free to flow around the arm during rotation. The arm cuts through the chocolate and functions as a carrier for the mixing element, which does the real job of mixing performance in the mass chamber instead of the arm as by the prior art.

When the radially extending part comprises a plate-shaped sheave arranged centrally, the mass is blocked from flowing vertically at the central part of the chamber. Instead the mass is forced to flow horizontally below and above, respectively, of the plate-shaped sheave. This is especially advantageous when the chocolate mass enters and leaves, respectively, the chambers through ring-shaped openings arranged concentrically at the shaft. The mass is then forced radially out towards the moving mixers when entering the chambers, and radially in towards the next ring-shaped opening for leaving the particular chamber. All mass that enters a chamber is then mixed through by the rotating mixers.

When an internal ring gear is arranged extending along the inside of the peripheral wall of the mass chamber, and the planetary mixer is carried by a gear wheel which meshes with the internal ring gear, the planetary mixers are rotated with constant revolutions.
Due to the meshing engagement of the planet wheel with the peripheral ring gear, the planet wheel accomplish a circular path in the chamber and is simultaneously being rotated around its own centre. Each mixing element is carried by a planet wheel and performs the same simultaneous pattern of mixing movements in the chocolate mass. The movement along the circular path provides a continuous mixing of the central part of the chambers. The continuous rotation of the mixing elements around their own centres provide an unforeseen effective mixing of the chocolate in the parts of the chamber distant to the central part, i.e. at the centre of the chamber and at the periphery thereof.

The continuous sweeping of the chamber with mixing elements rotating around their own axis ensures that there are no longer parts of the chambers present, where the mass is not being properly and evenly mixed during tempering. The improved mixing provides a homogenous chocolate mass during tempering, which ensures a perfectly controllable crystallisation and consequently high quality of the tempered mass, which is easily reproducible

The rotation of the mixing elements along the circular path in the chamber superimposed with the rotation around its own centre also provide close to constant velocities of the mixing elements over the chocolate chamber area. In comparison with the prior art exhibiting very large differences in shear-values over the mass chamber area, the inventive improvement is remarkably and the obtained shear values are close to being the same over the chamber surfaces. This provides for crystallisation made under similar conditions all over at the chamber surfaces, which provides for a homogenous mass tempered to high quality.

The severely improved mixing of the chocolate mass, and the close to constant shear-values all over the areas of the chocolate chambers, together provides a tempering apparatus with a far more effective tempering process than before. Tests have revealed, that the inventive apparatus is capable of producing 3-4 times more high quality chocolate per hour of the same type and recipe as is possible with the prior art apparatus having the same total mass chamber area.

It means, that the inventive tempering apparatus of the same size as the prior art apparatus exhibit a severely improved capacity span of kilograms tempered mass per hour. Or vice versa. The inventive tempering apparatus only needs 1/3 of the total cooling chamber surface area of the prior art apparatus for tempering the same amount of chocolate mass per hour. Consequently, the inventive apparatus are made much smaller in size than before. The height of the column is for example reduced to a third of the prior art with the same diameter of the column. If reduced to half height the diameter of the column is also reduced remarkably. The weight of the apparatus is reduced to around half of the prior machines, and handling is made much easier. Most of the auxiliary equipment around the column is also made smaller in size and weight, such as the gearmotor for the shaft.

The tempering apparatus can run for a high number of hours before service is required. It is easy and simple to connect the mixing elements to the planet gear wheel, and the construction has a few parts. All chocolate is continuously released from between any of the teeth at the sun gear wheel or at the ring gear.

When the planet wheel is sandwiched in between a lower and an upper mixing element there are provided two effective mixing elements simultaneously performing the same pattern of movement. The lower mixing element mixes up the mass at the lower chamber surface and the upper mixing element at the upper chamber surface. Shear gaps and shear effects are created at both chamber surfaces. During the passage of the mixers over the two respective chamber surfaces, crystals are created in the shear gaps and simultaneously mixed up into the mass.

When the radial extending arm and the ring gear extend in between the two mixing elements there is provided further shear gaps for the chocolate mass. Four new shear areas are created. Two further areas are created between the upper sides of the lower mixing element and the lower side of the arm and the lower side of the ring gear, respectively. Two more areas are created between the lower sides of the upper mixing element and the upper side of the arm and the upper side of the ring gear, respectively. The improvement in shear areas provides for a higher production of tempered chocolate mass.

When the mixing elements have the shape of a star with at least three fingers, the outer ends of the fingers are extending between the shaft and the peripheral wall of the mass chamber. The fingers effectively sweep and mix the mass through all parts of the chamber during one rotation of the planet wheel. The provided shear area of the star-shaped mixers are perfectly balanced, not being too big nor too small, and at the same time the fingers provide excellent sweeping and mixing of the mass. The created crystals are effectively removed and mixed up into the mass at a broad range of revolutions of the shaft, such as between 25 and 100 rpm.

When the mixing elements have the shape of a disc or sheave, areas of the outer surfaces of the discs are highly effective providing shear effect in the mass due to the superimposed movements of the circle and of the rotations. The discs may be planar providing maximum shear effect or they may be open in areas for passage of mass there through. When the mixers have the shape of a disc the largest possible shear areas or shear-values are obtainable, for example for tempering of low-viscosity mass when required.

The invention is explained further below under reference to preferred embodiments as well as the drawing, in which
fig. 1 is a schematic view of the inventive tempering apparatus,
fig. 2 is a perspective view of a single element from the inventive tempering column comprising both mass chamber and underlying water chamber,
fig. 3 is the same seen in vertical section,
fig. 4 is the same seen from above without mixing elements for clarity,
fig. 5 is a schematic view of the inventive pattern of movement of the planetary mixers,
fig. 6 is a schematic view in vertical section of a tempering column with interconnecting channels arranged at the periphery of the chambers,
fig. 7 is a schematic view in vertical section of a tempering column with interconnecting channels arranged concentrically around the shaft,
fig. 8 is a schematic view of another embodiment of two arms each carrying a large sprocket wheel,
fig. 9 is a perspective view of another embodiment of three arms each sandwiched in between two large mixing discs,
Fig. 10 is another embodiment of a single element from the inventive tempering column comprising both mass chamber and underlying water chamber,
fig. 11 is the same embodiment as in figure 10, seen from above, and
fig. 12 is a comparison between the size of a prior art tempering column with two different inventive columns that both have the same maximum tempering capacity.

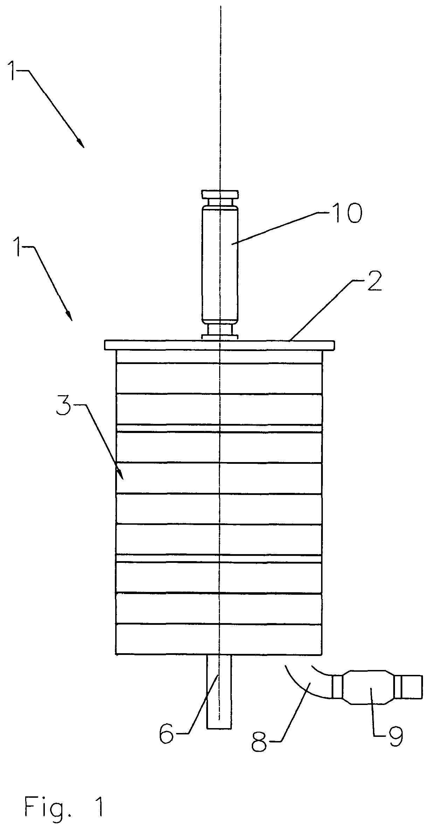

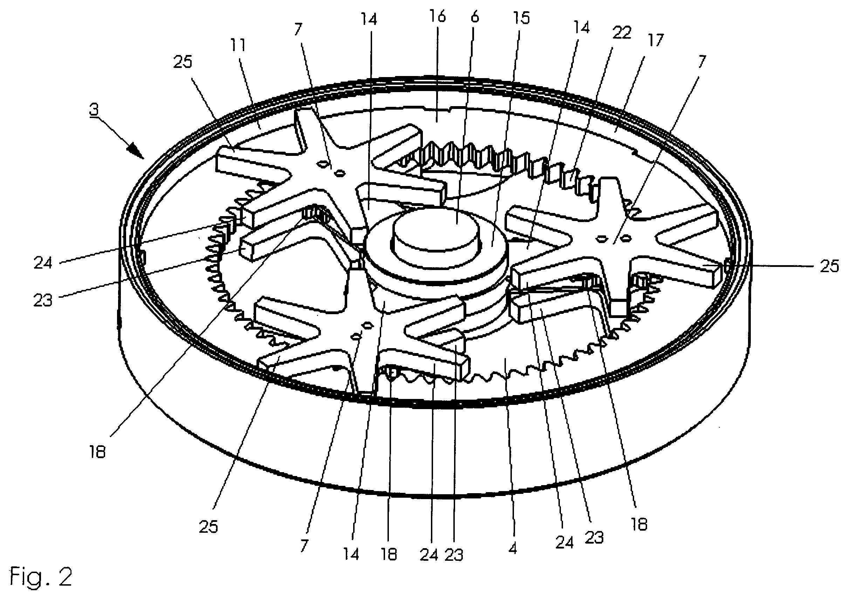

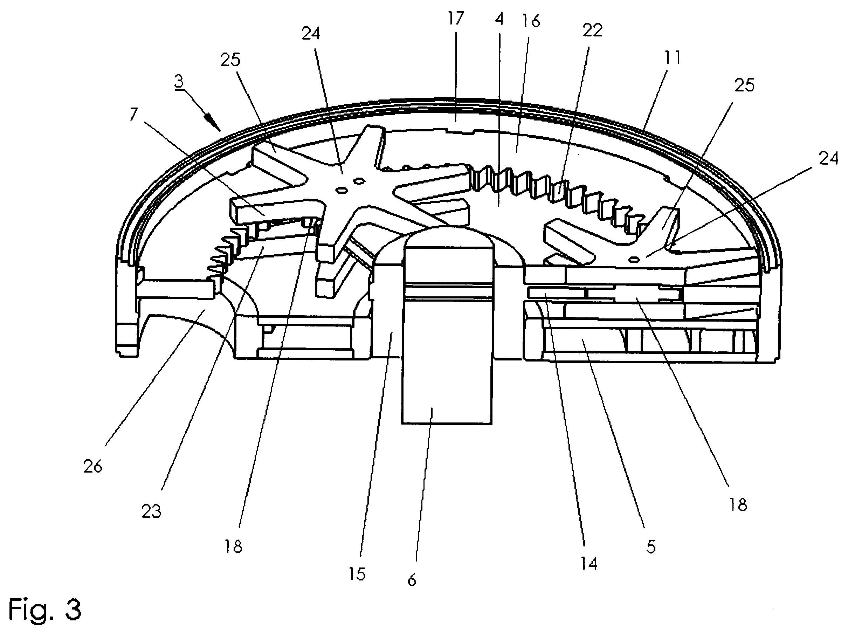

The apparatus 1 for continuous tempering of chocolate mass disclosed in figure 1 comprises a column 2 of disc-shaped elements 3 stacked upon each other. As each element has a mass chamber 4 closed from a lower water chamber 5, such as disclosed in figure 3, the column 2 comprises a succession of mass chambers 4 and intermediary water chambers 5. A central drive shaft 6 is in engagement with mixing elements 7 arranged in each mass chamber 4, as disclosed in figures 2 and 3.

The column has an inlet 8 and a pump 9 for pumping chocolate mass into the column 2. An outlet 10 for the ready tempered mass leaving the column 2 is connected at the top of the column. The chocolate mass is pumped through the column 2 from bottom towards the top of the column 2. The inlet 8 and the outlet 10 may also be arranged vice versa, so that the chocolate flows through the column 2 from top towards bottom. The column 2 is fixed in a steel frame or support, which is not disclosed as it is not part of the invention.

In the peripheral wall 11 of each element 3 is an inlet opening 12 and an outlet opening 13 for the water circulating through the water chamber 5 during tempering of the chocolate mass. The temperature and flow of the water is controlled in well-known manner by water circuits connected to the inlets 12 and outlets 13 of the chambers 3. The mass is cooled, crystallised and reheated or stabilised passing through the column 2 by the influence of heat-exchange with the particular water circuits.

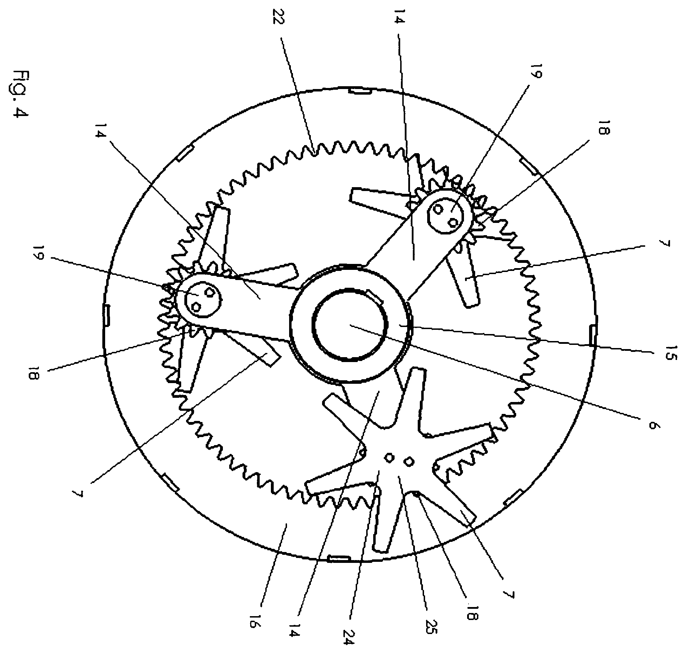

As disclosed in figures 2, 3 and 4 three radially extending, plate-shaped arms 14 are arranged in the mass chamber 4 connected to a hub 15 engaged on the shaft 6. An internal ring gear 16 is permanently fixed extending along the inside 17 of the peripheral wall 11 of the mass chamber 4. At the disclosed embodiment the arms 14 are "double-layered" and three intermediary planet gear wheels 18 are arranged in between the two plate-layers of the arms 14. The planet gear wheels are each arranged with a central pivot or bearing 19 at the end of the particular arm 14 as disclosed in figure 4. The teeth 20 of the planet gear wheels 18 meshes with the teeth 22 of the internal ring gear 16.

At the disclosed embodiment each planet gear wheel 18 is sandwiched in between a lower star-shaped mixing element 23 and an upper star-shaped mixing element 24, referring to figures 2-4. Each of the star-shaped mixing elements has six fingers 25, which extend as close as possible to the inside 17 of the peripheral chamber wall 11 as well as to the central hub 15 of the arms 14 during rotation.

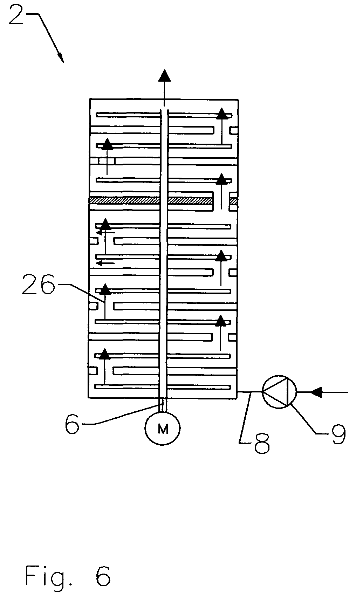

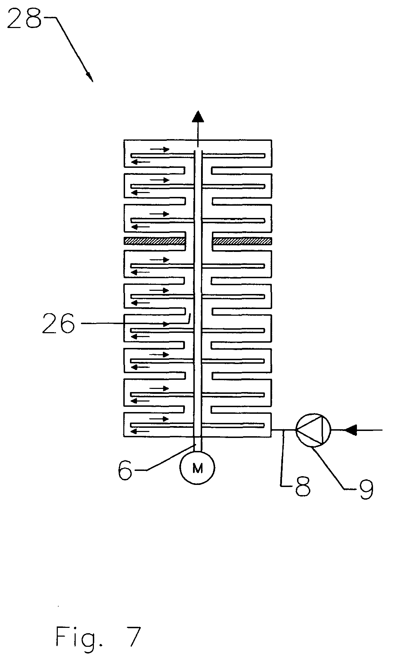

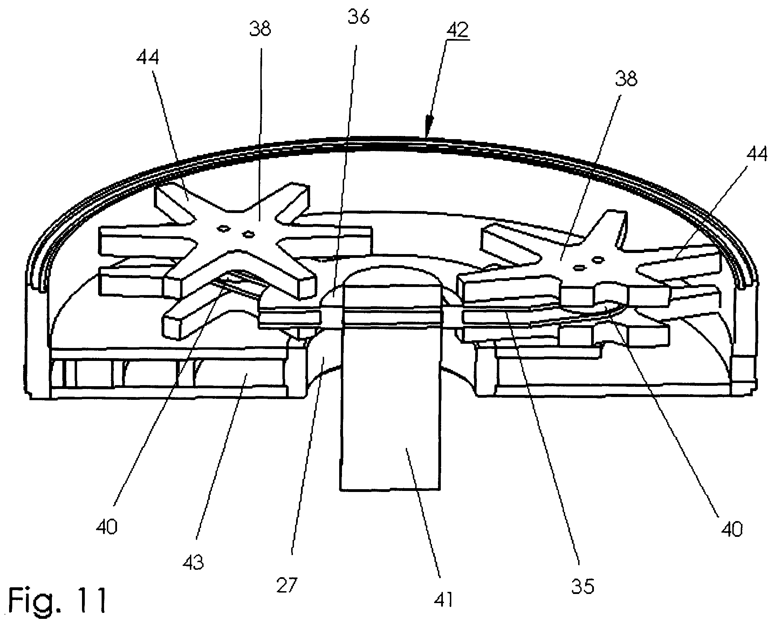

The chocolate passes into the chambers via peripheral openings 26 in the elements 4, as schematically disclosed in figure 3 and 6. The chocolate mass may also pass in and out of the chambers 4 via openings 27 arranged around the shaft 6 and the hub 15, as disclosed at the column 28 of figure 11. This principle for mass flow through the column 2 is disclosed schematically in figure 7.

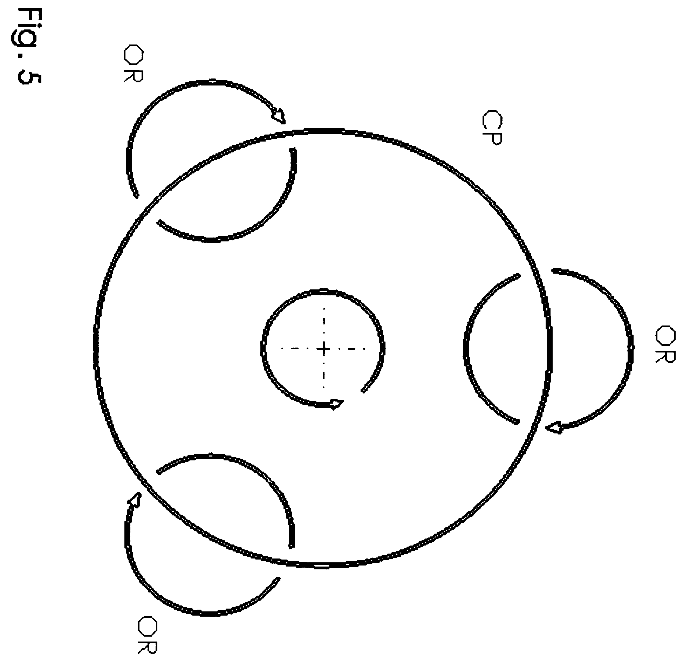

By rotation of the shaft 6, the engaged hub 15 and the plate-shaped arms 14 are rotated. The meshing engagement of the planet gear wheels 18 with the peripheral ring gear 16, makes the planet wheels rotate in the opposite direction as that of the plate-shaped arms 14. The planet gear wheels 18 accomplish a circular path CP in the chambers 4 and is simultaneously being rotated in an orbital rotation OR as disclosed schematically in figure 5.

At the disclosed embodiment the exchange between the planet gear wheel 18 and the ring gear 16 is 1: 5,21. For each revolution of the shaft 6 the planet gear wheels 18 have completed a full circle path CP through the chambers 4 and 5,21 revolutions OR each. When the shaft rotates with 35 rpm the planet gear wheels 18 and consequently the star-shaped mixers 23, 24 simultaneously rotates OR with 182 rpm, i.e. figure 5. These settings have found to be advantageous for high quality tempering of standard chocolate recipes of dark and milk chocolate. By lowering or rising the revolutions per minute of the shaft the mixing and shear intensity can be adapted to the requirements. The exchange relations between planet gear wheels and sun gear wheel and ring gear, respectively are easily changed if needed for tempering of masses with different types if required.

Each star-shaped mixing element 24, 25 is carried by a planet wheel 18 and performs the same simultaneous pattern of mixing movements in the chocolate mass. The movement along the circular path CP provides a continuous mixing of the central part of the chambers 4. The rotation OR of the star-shaped mixing elements 24, 25 provide an unforeseen effective mixing of the chocolate mass simultaneously in all the parts of the chamber 4. The lower mixing element 23 mixes through the mass in the lower part of the chamber 4, and the upper mixing element 24 mixes through the mass in the upper part of the chamber 4.

As the plate-shaped arms 14 and the ring gear 16 extend in between the two mixing elements 23, 24 there is provided further shear gaps between the mixing elements 23, 24 and the sandwiched surfaces of the plate-shaped arms 14 and the ring gear 16, respectively. The enlarged shear areas provides for higher capacity of producing tempered chocolate mass in an apparatus of the same size.

When entering the chambers 4 through the peripheral openings 26, the mass is mixed through in the lower part of the chamber 4 by the passage of the rotating arms 14 and lower mixers 23. Then, the mass flows through to the upper part of the chamber 4 under the intense mixing action of the star-shaped mixers 23, 24. At the upper part of the mass chamber the mass is mixed through by the passage of the upper mixing elements 24 while it flows towards the peripheral opening 26 towards the next chamber 4 in the column 2. Hereby is achieved an unforeseen effective mixing of the complete mass volume passing through the tempering apparatus. It ensures that all parts of the tempered mass volume is mixed through.

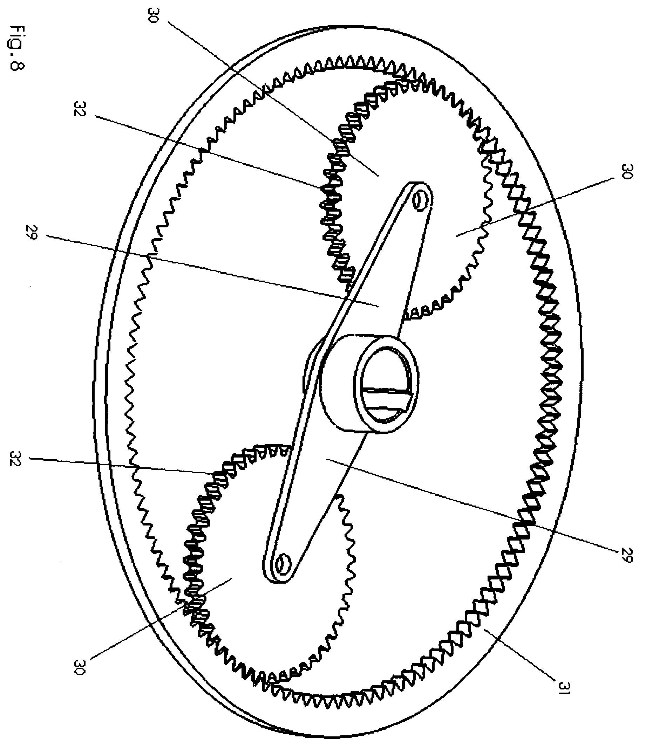

The mixing elements may have many different embodiments as long as they are carried by plate-shaped radially extending parts according to the Inventive solution. In figure 8 is for example schematically disclosed another embodiment by which two arms 29 each carry a pivoted gear wheel 30 meshing with the internal ring gear 31. The gear wheel may function directly as mixers provided by their teeth 32, or additional mixers may be arranged on the gear wheels. The surfaces 33 of the gear wheels 30 functions as major shear-providing surfaces when required.

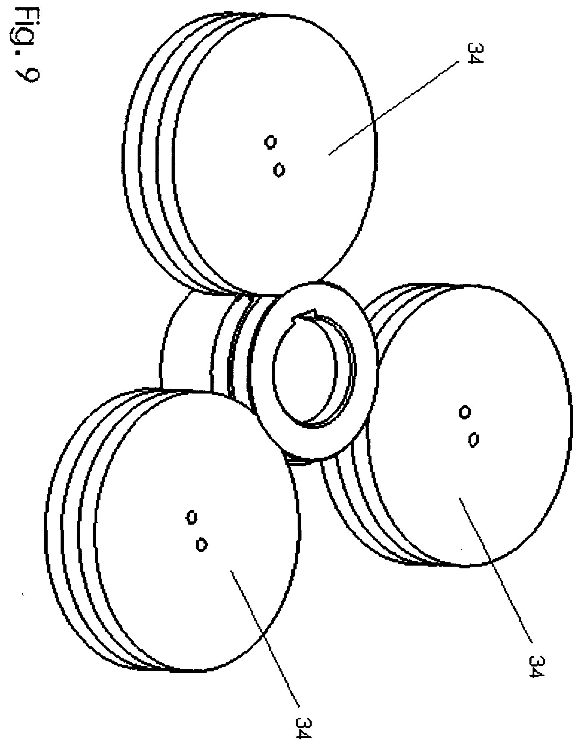

In figure 9 is disclosed a further embodiment of the invention where the planet gear wheels are sandwiched in between major discs 34 for providing huge shear surfaces.

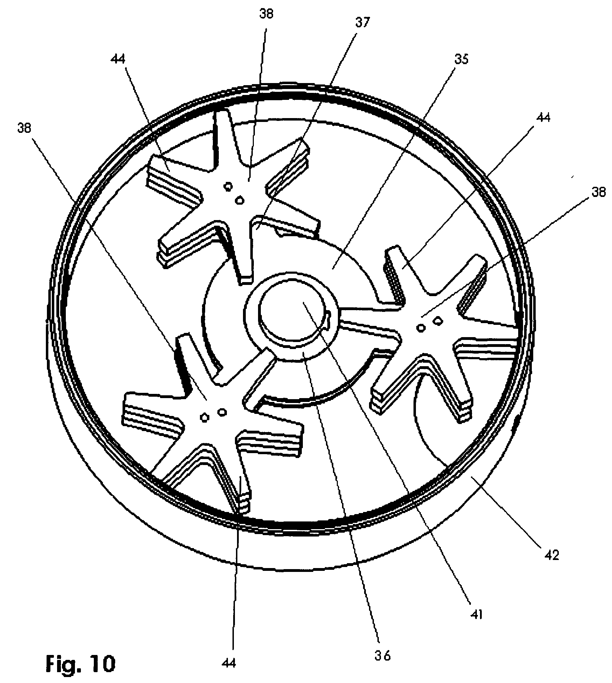

At the embodiment of figure 10 and 11, a major plate-shaped sheave 35 is carried by the central hub 36. Three arms 37 extend further radially from the sheave 35 and each carries two planetary mixers 38, 39 at their ends. The mixers 38, 39 are pivotally arranged 40 so that they are free to rotate. The openings for the chocolate is arranged as ring-shaped openings 27 at the shaft 41. The elements 42 have water chambers 43 for the heat-exchanging water. The planetary mixers 38, 39 are star-shaped having six fingers 44.

The mass enters into the chambers via the ring-shaped opening 27 and is immediately restricted by the central disc 35 so the mass flow radially out towards the periphery. During that the mass is mixed through intensively by the rotating lower mixer 39. The mass is mixed through by the upper mixers 38 when flowing radially in towards the next opening 27 in direction of the mass chamber above.

It ensures, that no mass volumes are left without mixing for longer periods than others in the chamber. It is a solution, that provides true "first-in - first out" passage of the chocolate mass through the tempering apparatus.

As the planetary mixers 38, 39 each have more than two fingers 44 they rotate by themselves when the shaft 41 revolves. The planet mixers 38, 39 then perform the combined rotation OR and movement along the circular path CP as in figure 5. Most effective is when the mixers have 6 fingers 44 as disclosed in figures 10 and 11.

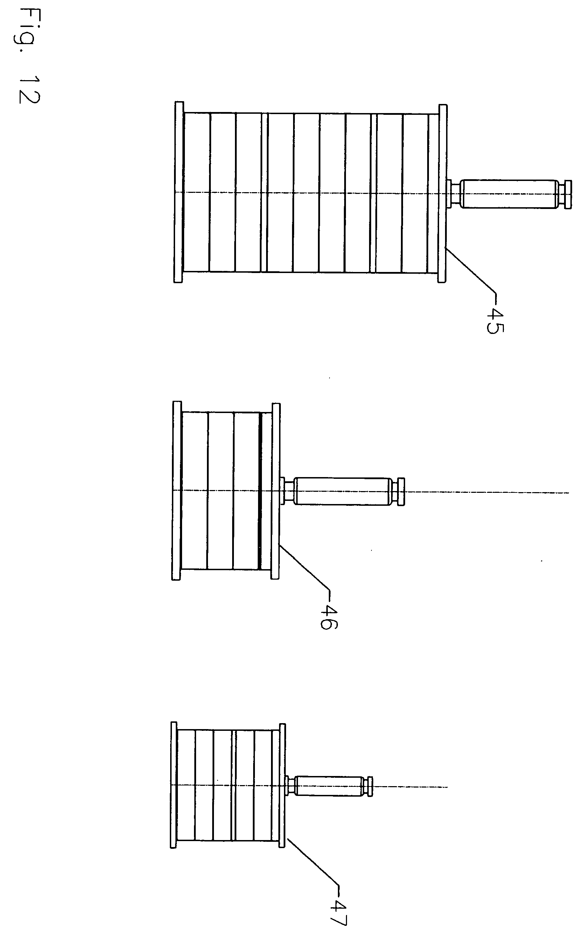

In figure 12 is disclosed a prior art tempering column 45 and two different tempering columns 46 and 47 both comprising the inventive solution according to figures 2-5. All three tempering columns have a maximum tempering capacity of 2000 kg chocolate mass per hour of the same chocolate type.

Tests have revealed, that the inventive apparatus is capable of producing 3-4 times more high quality chocolate per hour of the same type and recipe as is possible with the prior art apparatus having the same total mass chamber area.

It means, that the inventive tempering apparatus of the same size as the prior art apparatus exhibit a severely improved capacity span of kilograms tempered mass per hour. The inventive tempering apparatus needs only 1/3 of the total cooling chamber surface area of the prior art apparatus for tempering the same amount of chocolate mass per hour. Consequently, the inventive apparatus 46, 47 are made much smaller in size than before. The height of the column 46 is for example reduced to a third of the prior art column 45 with the same diameter.

The novel column 47 has reduced to half height of the prior art column 45 and the diameter of the column 47 is also reduced remarkably. The weight of the inventive apparatus 46, 47 is reduced to around half of the prior machines 45, and handling is made much easier. Most of the auxiliary equipment around the column is also made smaller in size and weight, such as the gearmotor for the shaft.

Many different shapes and forms of the mixing elements are possible, as long as the inventive solution of planet wheels carrying the mixing elements and their advantageous path through the mass chambers are preserved. The number of the planet wheels carrying mixing elements in a mass can also be altered and adopted to the particular requirements. For example may two planet mixers be sufficient in chambers tempering high-viscosity or heavy-duty mass. In mass chambers tempering low viscosity mass such as highly liquid cocoa butter a higher number of planetary mixers, such as four per chamber can be more effective.
- 1:: apparatus for continuous tempering
- 2:: tempering column
- 3:: disc-shaped element
- 4:: mass chamber
- 5:: water chamber
- 6:: drive shaft
- 7:: mixing element
- 8:: chocolate inlet
- 9:: chocolate pump
- 10:: chocolate outlet
- 11:: peripheral wall of mass chamber
- 12:: water inlet opening
- 13:: water outlet opening
- 14:: plate-shaped arm
- 15:: hub for arms
- 16:: internal ring gear
- 17:: inside of wall
- 18:: planet gear wheel
- 19:: bearing or pivot
- 20:: teeth of planet gear wheel
- 21::
- 22:: teeth of ring gear
- 23:: lower star-shaped mixing element
- 24:: upper star-shaped mixing element
- 25:: fingers of mixing element
- 26:: opening at the periphery
- 27:: ring-shaped opening
- 28:: column
- 29:: two arms
- 30:: gear wheel
- 31:: internal ring gear
- 32:: teeth
- 33:: surfaces
- 34:: discs
- 35:: plate-shaped sheave
- 36:: hub
- 37:: arms
- 38:: mixer
- 39:: mixer
- 40:: pivot
- 41:: shaft
- 42:: element
- 43:: water chambers
- 44:: fingers of mixers
- 45:: prior art tempering column
- 46:: inventive tempering column
- 47:: inventive tempering column

## Claims

1. Apparatus (1) for continuous tempering of chocolate mass comprising a column (2) of mass chambers (4) and intermediary water chambers (5), a central drive shaft (6, 41) in engagement with mixing elements (7) arranged in the mass chambers(4), **characterized in, that** a radially extending part (14, 35) is arranged in the mass chamber (4) with its inner end connected to a hub (15, 36) engaged on the shaft (6, 41), and that the mixing elements (7) comprise at least one planetary mixer (23, 24; 38, 39) pivotally arranged on the radially extending part (14, 35), at a fixed radius from the centre of the shaft (6, 41).

2. Apparatus according to claim 1, **characterized in, that** the radially extending part is a plate-shaped arm (14).

3. Apparatus according to claim 1, **characterized in, that** the radially extending part comprises a plate-shaped sheave (35) arranged centrally.

4. Apparatus according to claim 1, **characterized in, that** an internal ring gear (16) is arranged extending along the inside (17) of the peripheral wall (11) of the mass chamber (4), and that the planetary mixer (23, 24) is carried by a gear wheel (18) which meshes with the internal ring gear (16).

5. Apparatus according to claim 4, **characterized in, that** the planet gear wheel (18) is sandwiched in between a lower and an upper mixing element (23, 24).

6. Apparatus according to claim 5, **characterized in, that** the radial extending part (14) and the ring gear (16) extend in between the two mixing elements (23, 24).

7. Apparatus according to claim 1, **characterized in, that** the mixing elements have the shape of a star (23, 24) with at least three fingers (25), which are extending to the hub (15) of the radial extending part (14) as well as to the inside (17) of a peripheral wall (11) of the mass chamber (4).

8. Apparatus according to claim 1, **characterized in, that** the mixing elements have the shape of a disc (30, 34).

## Patentansprüche

1. Einrichtung (1) zum kontinuierlichen Temperieren einer Schokoladenmasse, umfassend eine Säule (2) aus Massenkammern (4) und dazwischenliegenden Wasserkammern (5) sowie eine mittlere Antriebswelle (6, 41), die mit in den Massenkammern (4) angeordneten Mischelementen (7) in Eingriff steht, **dadurch gekennzeichnet, dass** ein sich radial erstreckendes Teil (14, 35) so in der Massenkammer (4) angeordnet ist, dass sein inneres Ende mit einer Nabe (15, 36) verbunden ist, die mit der Welle (6, 41) in Eingriff steht, und dass die Mischelemente (7) mindestens einen Planetenmischer (23, 24; 38, 39) umfassen, der in einem festgelegten Radius von der Mitte der Welle (6, 41) schwenkbar an dem sich radial erstreckenden Teil (14, 35) angeordnet ist.

2. Einrichtung nach Anspruch 1, **dadurch gekennzeichnet, dass** das sich radial erstreckende Teil ein plattenförmiger Arm (14) ist.

3. Einrichtung nach Anspruch 1, **dadurch gekennzeichnet, dass** das sich radial erstreckende Teil eine mittig angeordnete plattenförmige Scheibe (35) umfasst.

4. Einrichtung nach Anspruch 1, **dadurch gekennzeichnet, dass** ein inneres Hohlrad (16) so angeordnet ist, dass es sich entlang des Inneren (17) der Umfangswand (11) der Massenkammer (4) erstreckt, und dass der Planetenmischer (23, 24) durch ein Zahnrad (18) getragen ist, das mit dem inneren Hohlrad (16) kämmt.

5. Einrichtung nach Anspruch 4, **dadurch gekennzeichnet, dass** das Planetenzahnrad (18) zwischen einem unteren und einem oberen Mischelement (23, 24) angeordnet ist.

6. Einrichtung nach Anspruch 5, **dadurch gekennzeichnet, dass** sich das radial erstreckende Teil (14) und das Hohlrad (16) zwischen den beiden Mischelementen (23, 24) erstrecken.

7. Einrichtung nach Anspruch 1, **dadurch gekennzeichnet, dass** die Mischelemente die Form eines Sterns (23, 24) mit mindestens drei Fingern (25) haben, die sich sowohl zur Nabe (15) des sich radial erstreckenden Teils (14) als auch zum Inneren (17) einer Umfangswand (11) der Massenkammer (4) erstrecken.

8. Einrichtung nach Anspruch 1, **dadurch gekennzeichnet, dass** die Mischelemente die Form einer Scheibe (30, 34) haben.

## Revendications

1. Appareil (1) de conditionnement en continu de masse de chocolat, comprenant une colonne (2) de chambres de masse (4) et de chambres d'eau intermédiaires (5), un arbre d'entraînement central (6, 41) en prise avec des éléments de mélange (7) agencés dans les chambres de masse (4), **caractérisé en ce qu'**une partie s'étendant radialement (14, 35) est agencée dans la chambre de masse (4) avec son extrémité interne connectée à un moyeu (15, 36) engagé sur l'arbre (6, 41), et **en ce que** les éléments de mélange (7) comprennent au moins un mélangeur planétaire (23, 24 ; 38, 39) agencé de manière pivotante sur la partie s'étendant radialement (14, 35), suivant un rayon fixe depuis le centre de l'arbre (6, 41).

2. Appareil selon la revendication 1, **caractérisé en ce que** la partie s'étendant radialement est un bras (14) en forme de plaque.

3. Appareil selon la revendication 1, **caractérisé en ce que** la partie s'étendant radialement comprend une poulie (35) en forme de plaque agencée centralement.

4. Appareil selon la revendication 1, **caractérisé en ce qu'**une couronne dentée intérieure (16) est agencée de manière à s'étendre le long de l'intérieur (17) de la paroi périphérique (11) de la chambre de masse (4), et **en ce que** le mélangeur planétaire (23, 24) est porté par une roue d'engrenage (18) qui s'engrène avec la couronne dentée intérieure (16).

5. Appareil selon la revendication 4, **caractérisé en ce que** la roue d'engrenage planétaire (18) est prise en sandwich entre un élément de mélange inférieur et un élément de mélange supérieur (23, 24).

6. Appareil selon la revendication 5, **caractérisé en ce que** la partie s'étendant radialement (14) et la couronne dentée (16) s'étendent entre les deux éléments de mélange (23, 24).

7. Appareil selon la revendication 1, **caractérisé en ce que** les éléments de mélange ont la forme d'une étoile (23, 24) ayant au moins trois branches (25), qui s'étendent jusqu'au moyeu (15) de la partie s'étendant radialement (14) ainsi que jusqu'à l'intérieur (17) d'une paroi périphérique (11) de la chambre de masse (4).

8. Appareil selon la revendication 1, **caractérisé en ce que** les éléments de mélange ont la forme d'un disque (30, 34).
